# EUROPÄISCHE PATENTSCHRIFT

(11) **EP 2 331 719 B1**
(45) Veröffentlichungstag und Bekanntmachung des Hinweises auf die Patenterteilung: **01.01.2014**
(21) Anmeldenummer: 09744322.0
(22) Anmeldetag: 23.09.2009
(51) Int. Cl.: C22B 19/30, C22B 7/00, C22B 1/00, C22B 3/08

(54) **VERFAHREN ZUR SELEKTIVEN SAUREN ENTZINKUNG VON STAHLSCHROTTEN**
METHOD FOR THE SELECTIVE ACIDIC DEZINCIFICATION OF STEEL SCRAP
PROCÉDÉ DE DÉZINGAGE ACIDE SÉLECTIF DE FERRAILLES D'ACIER

(30) Priorität: 23.09.2008 DE 102008048493
(43) Veröffentlichungstag der Anmeldung: 15.06.2011
(73) Patentinhaber: Drt Deutsche Rohstofftechnik GmbH, 45478 Mülheim a. d. Ruhr (DE)
(72) Erfinder: GOCK, Eberhard, 38640 Goslar (DE); PILLKAHN, Hans-Bernd, 58791 Werdohl (DE); MEYNERTS, Udo, 45478 Mülheim a. d. Ruhr (DE)
(74) Vertreter: Schöneborn, Holger
(86) Internationale Anmeldenummer: PCT/EP2009/006846
(87) Internationale Veröffentlichungsnummer: WO 2010/034465

(56) Entgegenhaltungen:
- DE-A1-102007 001 190
- DE-A1-102008 016 323
- FR-A- 2 156 316
- FR-A- 2 737 673
- GB-A- 2 334 969
- DATABASE WPI Week 199246 Thomson Scientific, London, GB; AN 1992-378938 XP002567051 & JP 04 280933 A (NIPPON STEEL CORP) 6. Oktober 1992 (1992-10-06)

## Beschreibung

Die Vorentzinkung von Stahlschrotten, insbesondere Einsatzstoffen für die Gießereiindustrie ist aus verfahrenstechnischen und apparatespezifischen Gründen bei der üblichen Induktionsofentechnologie erforderlich. Mit zunehmender Tendenz, die Korrosionsschutzbehandlung durch Verzinken auf die gesamte Verkehrstechnik auszuweiten, lassen sich Vorentzinkungsmaßnahmen nicht mehr umgehen, wenn eine genügend große Menge an zinkfreiem Stahlschrott für die Gießereien zur Verfügung stehen soll. Die in der Stahlindustrie heute überwiegend angewandte produktionsintegrierte Entzinkung mit nachfolgender Konzentrierung von Zinkoxid im Wälzprozess, das den Zinkhütten als Sekundärrohstoff zugeführt wird, kommt für die Gießereiindustrie nur nach spezifischer Modifizierung der Induktionsofentechnik z. B. durch abschnittsweises Vorerhitzen unter Vakuum in Betracht.

Im Mittelpunkt des Interesses stehen daher hydrometallurgische Verfahren. Aufgrund des amphoteren Charakters von Zink ist sowohl die saure als auch die basische Route gangbar. Das Problem bei der basischen Route ist ein hoher Energieaufwand durch die erforderlichen hohen Temperaturen (> 80°C) und die geringe Kapazität bedingt durch die niedrige maximale Zinkkonzentration (ca. 30 g/l) und die lange Reaktionsdauer (ca. 60 min.).

Bei der effektiven sauren Route wird bei Raumtemperatur gearbeitet und eine Zinkkonzentration von 130 g/l erreicht. Die Reaktionsdauer beträgt max. 20 min. Der entscheidende Nachteil dieser Route ist die simultane Eisenauflösung. Eine direkte elektrolytische Gewinnung des Zinks in Gegenwart von Eisen ist aufgrund der Gesetze der elektrischen Spannungsreihe der Elemente nicht möglich, so dass eine umfangreiche Laugenreinigung erforderlich ist, die das Verfahren unwirtschaftlich machen kann. Das Ziel bei der sauren Laugung sollte daher sein, den Eisengehalt so gering wie möglich zu halten. Da dies aus thermodynamischen Gründen nicht möglich ist, hat es verschiedenste Bemühungen zur Unterdrückung der simultanen Eisenauflösung gegeben.

Von der Societe de Prayon [Treatment of galvanized scrap iron by a wet method, Patent No. BE 773 906] wurde 1972 ein Patent beansprucht, das mit H₂SO₄ ein unabhängiges Recycling von Zink und Eisen aus galvanisiertem Schrott versucht hat. Eingesetzt wird wässrige H₂SO₄, der als Inhibitor zur Verzögerung der Eisenauflösung ein kolloidales Flockungshilfsmittel wie z. B. Gelatine, Knochenmark, Stärke, Dextrin, Guar Gummi oder Polyacrylamid zugesetzt wird. Die Konzentration des zugesetzten Kolloides kann 20-200 g/m³ betragen. Mit 20-200 g freier Schwefelsäure pro Liter wird das Laugeverfahren im Temperaturbereich zwischen 5 und 40°C, vorzugsweise bei 20°C durchgeführt. Die Zinkgewinnung erfolgt durch Elektrolyse.

Eine weitere indische Patentierung des Council of Scientific and Industrial Research [Council of Scientific and Industrial Research, India (Marthur, Prem Behari; Venkatakrishan, Narasimhan): Dezincing of steel scrap by leaching with inhibitor impregnated acid, Patent No. IN 143 253] von 1977 bezieht sich auf den Einsatz von 25-32 %iger H₂SO₄ oder HCl in Gegenwart von 0,25-2 % Formaldehyd als Inhibitor gegen die Eisenauflösung. Als Temperaturbereich wird 15-45°C angegeben.

British Steel Ltd.; Corus UK Ltd. [British Steel Ltd.; Corus UK Ltd. (Cosgrove, Martin; Weaver, Robert Wilton): Acidic bath for removal of coatings from scrap metal in recycling, Patent No. GB 2,334,969] wurde 1999 ein Patent erteilt, bei dem neben Zinkbeschichtungen auch organische Überzüge und Zinnbeschichtungen abgetrennt werden. Das saure Bad enthält 1-4 % HCl, 10-25 % Eisenchlorid und < 0,05 % eines Inhibitors auf Aminbasis. Optional sind auch verbrauchte Beizlösungen aus der Stahlbehandlung möglich. Der Stahlschrott wird im sauren Bad unter Reibeinwirkung behandelt. Dies geschieht durch Trommeln in einem Lochblechsystem.

Aus der GB 500 760 ist ein Verfahren zur sauren Entzinkung von Stahlschrott bekannt, bei dem als Inhibitor zur Verminderung der Eisenauflösung eine organische Verbindung verwendet wird, die ein Schwefelatom und eine substituierte oder unsubstituierte Aminogruppe enthält. Als Beispiele für Inhibitoren werden ein Sulfonamid und ein Thiocarbanilid angegeben.

Allen Verfahren ist gemeinsam, dass spezifische Reagenzien als Inhibitoren für die Eisenauflösung eingesetzt werden, die nicht recyclingfähig sind. Eine vollständige Unterdrückung der Eisenauflösung gelingt nicht. Darüber hinaus handelt es sich zum Teil um teure Reagenzien, die in einem vorlaufenden Verfahrensschritt konditioniert werden müssen, da es sich um eine Grenzflächenreaktion handelt. Ausnahmslos wird eine neue Komponente in das System eingeführt, deren Wirkung z. B. auf die elektrolytische Zinkgewinnung nicht abschätzbar ist.

Es wurde nun gefunden, dass die genannten Nachteile bei der Anwendung von Inhibitoren aufgehoben werden können, wenn Blechschrott eingesetzt wird, der mit Öl, insbesondere Mineralöl benetzt ist. Dies ist z. B. der Fall bei Stahlschrott, der direkt aus dem Umformprozess der Automobilindustrie kommt. Üblicherweise ist dieser Blechschrott mit Ziehölen bzw. Waschölen benetzt.

Überraschenderweise ergab sich, dass die Ölbeschichtung eine selektive Auflösung von Zink möglich macht, während die Eisenauflösung bis um den Faktor 10,6 verzögert wird. Zu erwarten gewesen wäre eine Behinderung der Entzinkung durch das Öl, tatsächlich wird jedoch die Entzinkung praktisch nicht behindert und lediglich die Eisenauflösung inhibiert.

Der zu entzinkende Stahlschrott wird typischerweise vor der Entzinkung mit dem Öl benetzt, wobei sich eine Benetzung in Fällen, in denen der Stahlschrott bereits über eine Ölschicht verfügt, unter Umständen erübrigt. Der Ölgehalt sollte zwischen 0,1 und 3 Gew.-% bezogen auf den Stahlschrott betragen. Durch eine Steigerung des Ölgehaltes bis auf 3 Gew.-% kann die Inhibitorwirkung autogen geführt werden, da sich beim Laugen und Waschen eine weitgehende Trennung von Öl und saurer Lösung ergibt und die Ölphase direkt wieder zur Konditionierung des zulaufenden Blechschrottes eingesetzt werden kann. Die Ölabtrennung kann über eine Phasentrennung erfolgen. Beispielsweise kann das aus der Entzinkungslösung ausgetragene Öl durch Flotationsunterstützung als reine Ölphase an der Oberfläche der Entzinkungslösung abgeschieden werden. Als sehr wertvoller Nebeneffekt wird darüberhinaus durch den verbleibenden Ölrestfilm auf dem entzinkten Blechschrott eine Korrosionsschutzschicht ausgebildet, so dass der Schrott ohne Oberflächenoxidation dem nachfolgenden Gießereiprozess zugeführt werden kann. Darüber hinaus erhöht sich auf diese Weise die Lagerbeständigkeit des entzinkten Stahlschrotts. Der auf dem entzinkten Schrott verbleibende dünne Ölfilm bewirkt somit einen Produktmehrwert durch eine höhere Schrottqualität. Bei allen bisher bekannten pyrometallurgischen und hydrometallurgischen Vorentzinkungsprozessen entstehen durch Oxidationsreaktionen sogenannte schwarze Schrotte mit einer Eisenoxidschicht. Bei dem Gießereiprozess führen hohe Eisenoxidanteile zu Fehlchargen.

Zur Entzinkung wird eine saure Lösung, in der Regel eine Schwefelsäurelösung eingesetzt, wobei die Säurekonzentration zwischen 20 und 250 g/l, insbesondere zwischen 100 und 200 g/l liegen kann. Die Temperatur bei der Entzinkung beträgt üblicherweise 15 bis 60°C, insbesondere 20 bis 30°C, bevorzugt ca. 25°C. Zur Beschleunigung der Zinkauflösung können der Entzinkungslösung Metallionen, insbesondere Kupfer- oder Nickelionen zugesetzt werden.

Die anfallenden zinkhaltigen Lösungen erreichen Zinkkonzentrationen bis 130 g/l bei Eisengehalten von 0,7 g/l Damit ist das Abfallproblem in Bezug auf die Eisenabtrennung minimiert. Im Falle des Einsatzes von Prozesssäuren aus der Zinkelektrolyse zur Entzinkung kann die gewonnene hochzinkhaltige Lösung problemlos wieder in den Zinkgewinnungsprozess einer Zinkhütte eingeschleust werden. Der Restölgehalt von 100 mg/l wird dort in der Stufe der Eisenfällung entfernt, so dass Störungen der Elektrolyse ausgeschlossen werden können. Grundsätzlich ist eine Kombination der Entzinkung mit der Primärzinkgewinnung aus Zinkerz möglich, indem die Säure zur Entzinkung eingesetzt wird, die auch für das Lösen des aus dem Zinkerz gewonnenen Zinkoxids erforderlich ist. Vor der Elektrolyse sind i. d. R. Reinigungsschritte notwendig, die grundsätzlich im Stand der Technik bekannt sind, beispielsweise eine Fest-/Flüssig-Trennung, eine Eisenfällung, chemische Fällungsverfahren oder eine Zementierung mit Zinkstaub.

Das beanspruchte Verfahren wird durch folgende Beispiele belegt:

### Beispiel 1:

Verzinkte gemischte Blechabfälle eines Automobilherstellers mit ca. 14 g Zn pro kg Stahl werden auf eine durchschnittliche Teilchengröße von 4 cm x 4 cm zerkleinert.

100 g des Materials werden mit 100 ml verdünnter Schwefelsäure, die eine Säureanfangskonzentration von 190 g H₂SO₄/l hat, bei 25°C gelaugt. Variiert wird der Zustand der Blechoberflächen. Einem Versuch mit ölfreiem Blech wurden Versuche mit zieh- und waschölhaltigen Blechen gegenübergestellt. Der Ölgehalt lag zwischen 0,7 und 1,7 %. Die Ergebnisse sind in **Tabelle 1** zusammengefasst.

**Tab. 1: Entzinkung von ölfreien und ölbehafteten Blechen in einer Stufe**

| | **ölfrei** | | **ölbehaftet** | | | |
|---|---|---|---|---|---|---|
| **Laugedauer** | **Zinkgehalt** | **Eisengehalt** | **Waschöl (0,7%)** | | **Ziehöl (1,7%)** | |
| **[min]** | **[g/l]** | **[g/l]** | **Zink [g/l]** | **Eisen [g/l]** | **Zink [g/l]** | **Eisen [g/l]** |
| 3 | 13,7 | 0,26 | 12,3 | 0,11 | 12,8 | 0,08 |
| 5 | 13,7 | 0,39 | 13,3 | 0,12 | 14,0 | 0,08 |
| 7 | 14,1 | 0,61 | 14,0 | 0,11 | 14,5 | 0,09 |
| 10 | 14,1 | 0,82 | 14,1 | 0,11 | 14,7 | 0,1 |
| 15 | 14,2 | 1,22 | 14,5 | 0,17 | 14,9 | 0,14 |
| 20 | 14,3 | 1,60 | 14,7 | 0,17 | 15,2 | 0,17 |

Nach 7 min stellt sich ein Verhältnis der Eisenkonzentration bei unverölten Blechen und ölbehandelten Blechen von 5,5 für Waschöl und 8,1 für Ziehöl ein. Mit der Verlängerung der Reaktionsdauer auf 20 min erhöht sich der Faktor bei Waschöl auf 10,6 und bei Ziehöl ebenfalls auf 10,6.

Für die verfahrenstechnische Umsetzung bedeutet dieses Ergebnis, dass sich der Prozess im Gegensatz zur sauren Laugung ohne Inhibitoren zunehmend stabilisiert und sich die relative Eisenauflösung mit zunehmender Laugedauer verringert.

### Beispiel 2:

Mit dem gleichen Material wurden praxisähnliche Versuche in der Art vorgenommen, dass der Endelektrolyt aus einer Zinkhütte mit 190 g H₂SO₄/l und einer Zinkkonzentration von 50 g/l eingesetzt wurde. Es wurden zunächst stufenweise (jeweils nach 7 min) ölfreie Blechchargen von jeweils 100 g zugeführt, um in Beispiel 3 den Vorteil des Ölzusatzes herausstellen zu können. Diese stufenweise Verfahrensweise ist erforderlich, um eine maximale Zinkaufkonzentrierung zu erreichen. **Tabelle 2** fasst die Ergebnisse zusammen.

**Tab. 2: Mehrstufige Entzinkung von ölfreien Blechen**

| **Laugestufe** | **Zinkgehalt** | **Eisengehalt** |
|---|---|---|
| | [g/l] | [g/l] |
| 1 | 61,0 | 0,5 |
| 2 | 75,4 | 1,1 |
| 3 | 92,5 | 1,7 |
| 4 | 106,0 | 2,1 |
| 5 | 119,9 | 2,3 |
| 6 | 132,9 | 2,4 |

Die verhältnismäßig geringe Eisenauflösung ist begründet durch die geringe Reaktionsdauer. Bei höheren Reaktionsdauern, die zur vollständigen Entzinkung gefahren werden müssen, erhöhen sich die Eisengehalte linear, so dass dann die Wirtschaftlichkeit des Prozesses in Frage gestellt ist.

### Beispiel 3:

Im Vergleich zu Beispiel 2 wird der gleiche Versuch bei einer Beschichtung mit 2,8% Ziehöl wiederholt. Die hierbei erzielten Ergebnisse zeigt **Tabelle 3.**

**Tab.3: Mehrstufige Entzinkung mit Ziehöl behandelter Bleche**

| **Laugestufe** | **Zinkgehalt** | **Eisengehalt** | **Inhibitoreffekt** | **Faktor** |
|---|---|---|---|---|
| | **[g/l]** | **[g/l]** | **[%]** | |
| 1 | 64,7 | 0,09 | 79,9 | 4,97 |
| 2 | 78,9 | 0,10 | 81,8 | 5,50 |
| 3 | 93,2 | 0,34 | 79,7 | 4,93 |
| 4 | 105,9 | 0,47 | 77,9 | 4,53 |
| 5 | 115,4 | 0,58 | 74,6 | 3,94 |
| 6 | 118,7 | 0,69 | 71,4 | 3,49 |

Wie zu erkennen ist, wird durch die Inhibitorwirkung des Öls eine Verringerung der Eisenauflösung bis um den Faktor 5,5 erreicht. Es besteht nun die Möglichkeit, den Laugeprozess zweistufig zu führen, wobei in der ersten Stufe der Inhibitoreffekt 80 % Verminderung der Eisenauflösung betragen sollte.

Wie aus den Beispielen hervorgeht, hat die beanspruchte Prozesstechnik in Bezug auf die Unterdrückung der Eisenauflösung ein Optimierungspotenzial, in dem die Prozessführung zweistufig erfolgen kann. Das heißt, die erste Stufe ist beendet, wenn der Faktor der Eisenauflösung im Bereich von 5-6 liegt.

## Patentansprüche

1. Verfahren zur Entzinkung von Stahlschrotten in saurer Lösung, **dadurch gekennzeichnet, dass** der Stahlschrott vor der Entzinkung mit einem Öl benetzt wird.

2. Verfahren nach Anspruch 1, **dadurch gekennzeichnet, dass** das Öl ein Mineralöl ist.

3. Verfahren nach Anspruch 1 oder 2, **dadurch gekennzeichnet, dass** das Öl ein Ziehöl oder ein Waschöl ist.

4. Verfahren nach einem der Ansprüche 1 bis 3, **dadurch gekennzeichnet, dass** das Öl bei der Entzinkung mit einem Massenanteil zwischen 0,1 und 3 % bezogen auf den Stahlschrott vorliegt.

5. Verfahren nach einem der Ansprüche 1 bis 4, **dadurch gekennzeichnet, dass** die saure Lösung Schwefelsäure enthält.

6. Verfahren nach einem der Ansprüche 1 bis 5, **dadurch gekennzeichnet, dass** die Entzinkung bei einer Säurekonzentration von 20 bis 250 g/l, insbesondere 100 bis 200 g/l erfolgt.

7. Verfahren nach einem der Ansprüche 1 bis 6, **dadurch gekennzeichnet, dass** das Öl bei oder nach der Entzinkung abgetrennt wird.

8. Verfahren nach Anspruch 7, **dadurch gekennzeichnet, dass** das abgetrennte Öl zur Vorbehandlung der Stahlschrotte wieder verwendet wird.

9. Verfahren nach einem der Ansprüche 1 bis 8, **dadurch gekennzeichnet, dass** durch die Gegenwart des Öls die unerwünschte Mitlaugung des Eisens inhibiert wird.

10. Verfahren nach Anspruch 9, **dadurch gekennzeichnet, dass** die Eisenauflösung im Vergleich zum ölfreien Entzinken um einen Faktor bis 10,6 verringert wird.

11. Verfahren nach einem der Ansprüche 1 bis 10, **dadurch gekennzeichnet, dass** die Entzinkung bei einer Temperatur zwischen 15°C und 60°C, insbesondere 20 und 30°C erfolgt.

12. Verfahren nach einem der Ansprüche 1 bis 11, **dadurch gekennzeichnet, dass** als saure Lösung zumindest teilweise eine saure Zinklösung verwendet wird, die beim Lösen von aus Zinkerz gewonnenem Zinkoxid entstanden ist.

13. Verfahren nach einem der Ansprüche 1 bis 12, **dadurch gekennzeichnet, dass** der sauren Lösung Metallionen, insbesondere Kupfer-und/oder Nickelionen zur Beschleunigung der Zinkauflösung zugesetzt werden.

14. Verfahren nach einem der Ansprüche 1 bis 13, **dadurch gekennzeichnet, dass** das gelöste Zink aus der sauren Lösung nach der Entzinkung der Stahlschrotte mittels Elektrolyse in metallischer Form zurückgewonnen wird.

15. Verfahren nach einem der Ansprüche 1 bis 14, **dadurch gekennzeichnet, dass** der entzinkte Stahlschrott aufgrund eines dünnen Ölfilms auf der Oberfläche korrosionsgeschützt und damit lagerbeständig ist, wodurch sich ein Produktmehrwert und eine höhere Schrottqualität ergibt.

## Claims

1. Method for the dezincing of steel scrap in an acidic solution, **characterized in that** the steel scrap is wetted with an oil before dezincing.

2. Method according to claim 1, **characterized in that** the oil is a mineral oil.

3. Method according to claim 1 or 2, **characterized in that** the oil is a drawing oil or a wash oil.

4. Method according to any of claims 1 to 3, **characterized in that** the oil is provided for dezincing at a mass proportion ranging between 0.1 und 3 % in relation to the steel scrap.

5. Method according to any of claims 1 to 4, **characterized in that** the acidic solution contains sulfuric acid.

6. Method according to any of claims 1 to 5, **characterized in that** the dezincing is carried out at an acid concentration ranging between 20 and 250 g/l, in particular at between 100 and 200 g/l.

7. Method according to any of claims 1 to 6, **characterized in that** the oil is separated during or after dezincing.

8. Method according to claim 7, **characterized in that** the separated oil is reused for the pre-treatment of steel scrap.

9. Method according to any of claims 1 to 8, **characterized in that** the undesirable co-leaching of iron is inhibited due to the presence of oil.

10. Method according to claim 9, **characterized in that** the dissolution of iron is reduced by a factor of up to 10.6 in comparison with an oil-free dezincing process.

11. Method according to any of claims 1 to 10, **characterized in that** the dezincing is effected at a temperature ranging between 15°C and 60°C, in particular at between 20 and 30°C.

12. Method according to any of claims 1 to 11, **characterized in that** an acidic zinc solution is used at least partially as acidic solution, said zinc solution being produced during the dissolution of zinc oxide extracted from zinc ore.

13. Method according to any of claims 1 to 12, **characterized in that** metal ions, in particular copper and/or nickel ions, are added to the acidic solution with a view to accelerating the dissolution of zinc.

14. Method according to any of claims 1 to 13, **characterized in that** after the dezincing of steel scrap the dissolved zinc is recovered from the acidic solution in metallic form by means of electrolysis.

15. Method according to any of claims 1 to 14, **characterized in that** the dezinced steel scrap surface is protected against corrosion by a thin film of oil so that the scrap storage life is increased resulting in added value being given to the product and the quality of the scrap being enhanced.

## Revendications

1. Procédé pour le dézingage de riblons d'acier en solution acide, **caractérisé en ce que** le riblon d'acier est mouillé par une huile avant le dézingage.

2. Procédé selon la revendication 1, **caractérisé en ce que** l'huile est une huile minérale.

3. Procédé selon la revendication 1 ou 2, **caractérisé en ce que** l'huile est un lubrifiant d'emboutissage ou une huile de rinçage.

4. Procédé selon l'une des revendications 1 à 3, **caractérisé en ce que** l'huile, lors du dézingage, est présente selon une proportion en masse comprise entre 0,1 et 3 % par rapport au riblon d'acier.

5. Procédé selon l'une des revendications 1 à 4, **caractérisé en ce que** la solution acide contient de l'acide sulfurique.

6. Procédé selon l'une des revendications 1 à 5, **caractérisé en ce que** le dézingage est réalisé en présence d'une concentration d'acide de 20 à 250 g/l, en particulier de 100 à 200 g/l.

7. Procédé selon l'une des revendications 1 à 6, **caractérisé en ce que** l'huile est séparée lors du dézingage ou après le dézingage.

8. Procédé selon la revendication 7, **caractérisé en ce que** l'huile séparée est réutilisée pour le prétraitement des riblons d'acier.

9. Procédé selon l'une des revendications 1 à 8, **caractérisé en ce que** la présence de l'huile provoque une inhibition de la colixiviation indésirable du fer.

10. Procédé selon la revendication 9, **caractérisé en ce que** la dissolution du fer est réduite d'un facteur allant jusqu'à 10,6 par rapport au dézingage sans huile.

11. Procédé selon l'une des revendications 1 à 10, **caractérisé en ce que** le dézingage a lieu à une température comprise entre 15 et 60°C, en particulier entre 20 et 30°C.

12. Procédé selon l'une des revendications 1 à 11, **caractérisé en ce qu'**on utilise en tant que solution acide, au moins en partie, une solution acide de zinc qui s'est formée lors de la dissolution de l'oxyde de zinc récupéré du minerai de zinc.

13. Procédé selon l'une des revendications 1 à 12, **caractérisé en ce qu'**on ajoute à la solution acide des ions métalliques, en particulier des ions cuivre et/ou nickel, pour accélérer la dissolution du zinc.

14. Procédé selon l'une des revendications 1 à 13, **caractérisé en ce que** le zinc dissous est récupéré de la solution acide après le dézingage des riblons d'acier par électrolyse sous forme métallique.

15. Procédé selon l'une des revendications 1 à 14, **caractérisé en ce que** le riblon d'acier dézingué est, grâce à un mince film d'huile sur sa surface, protégé contre la corrosion et donc est stable au stockage, ce qui confère au produit une valeur ajoutée et une plus grande qualité du riblon.
